# EUROPEAN PATENT APPLICATION

(11) **EP 1 335 315 A2**
(43) Date of publication of application: **13.08.2003**
(21) Application number: 03250855.8
(22) Date of filing: 12.02.2003
(51) Int. Cl.: G06F 17/60

(54) **Dual Dijkstra search for planning multiple paths**

(30) Priority: 12.02.2002 JP 2002034049
(71) Applicant: The University of Tokyo, Bunkyo-Ku, Tokyo (JP)
(72) Inventor: Nakamura, Yoshihiko, Tokyo (JP); Fujita, Yusuke, Tokyo (JP)
(74) Representative: Fenlon, Christine Lesley

(57) **Abstract**

The dual Dijkstra search for planning multiple paths is performed by: (1) calculating a first shortest cost from start to all nodes by utilizing an algorithm known as the Dijkstra algorithm; (2) calculating a second shortest cost from goal to all nodes by utilizing the Dijkstra algorithm; (3) summing up the first shortest cost and the second shortest cost to obtain a summed up shortest cost; and (4a) storing at all nodes the summed up shortest cost as a cost of shortest path from start to goal via respective nodes, or, (4b) obtaining at all nodes a shortest path from start to goal via respective nodes with reference to the summed up shortest cost, thereby searching a path from start to goal.

## Description

The present invention relates to the dual Dijkstra search for planning multiple paths that are preferably used for calculating multiple solutions rapidly and simultaneously with respect to various planning problems in the field of computer graphics or robotics and navigation systems and so on.

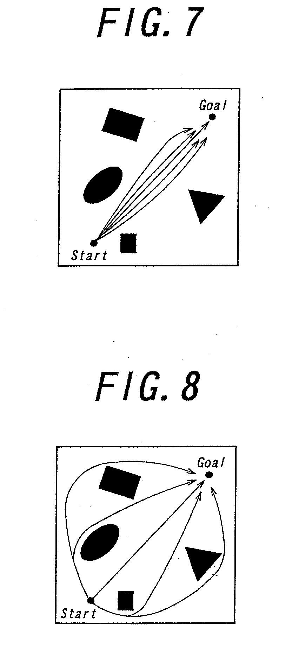

Usually, as a path search algorithm, the most suitable path from a start point to a goal point is searched. In the path search algorithm, there is sometimes a case such that multiple solutions are to be searched other than the most suitable solution. An algorithm for searching such multiple paths is generally investigated as the K shortest path algorithm. However, the K shortest algorithm is performed by: searching the most suitable path as shown in Fig. 7; searching successively other paths near the thus searched most suitable path; and deciding the second, third, and so on suitable paths, the following problems arise.
(1) Since it is necessary to perform repeated calculations, a long calculation time is necessary as compared to the case such that only the most suitable path is searched.
(2) Since many other paths are found near the most suitable path, it is necessary to make a value K larger if such other paths that are not analogous to the most suitable path are to be searched.

In a large number of problems, it is necessary to search different paths other than such analogous paths. Here, a term "different path" means a non-successive transition path as shown in Fig. 8. That is, the different path has different topology. In order to search such a path having a different topology, it is necessary to perform an extreme number of calculations in the known algorithm, since it has problems as mentioned above.

The present invention seeks to provide the dual Dijkstra search for planning multiple paths in a path search problem, wherein multiple paths other than the most suitable path can be searched simultaneously, and, wherein various paths other than analogous paths near the most suitable path can be searched.

According to preferred embodiments of the invention, the dual Dijkstra search for planning multiple paths, comprises the steps of: calculating a first shortest cost from start to all nodes by utilizing an algorithm known as the Dijkstra algorithm; calculating a second shortest cost from goal to all nodes by utilizing the Dijkstra algorithm; summing up the first shortest cost and the second shortest cost to obtain a summed up shortest cost; and storing at all nodes the summed up shortest cost as a cost of the shortest path from start to goal via respective nodes, thereby searching a path from start to the goal.

Moreover, according to embodiments of the invention, the dual Dijkstra search for planning multiple paths, comprises the steps of: calculating a first shortest cost from start to all nodes by utilizing an algorithm known as the Dijkstra algorithm; calculating a second shortest cost from goal to all nodes by utilizing the Dijkstra algorithm; summing up the first shortest cost and the second shortest cost to obtain a summed up shortest cost; and obtaining at all nodes a shortest path from start to goal via respective nodes with reference to the summed up shortest cost, thereby searching a path from start to goal.

Preferred embodiments of the present invention make it possible to search the multiple paths by the substantially same calculation time as that of obtaining the most suitable path only, by performing the steps of: (1) calculating a first shortest cost from start to all nodes by utilizing the Dijkstra algorithm; (2)-calculating a second shortest cost from goal to all nodes by utilizing the Dijkstra algorithm; (3) summing up the first shortest cost and the second shortest cost to obtain a summed up shortest cost; and (4a) storing at all nodes the summed up shortest cost as a cost of the shortest path from start to goal via respective nodes, or, (4b) obtaining at all nodes a shortest path from start to goal via respective nodes or, (4b) obtaining at all nodes a shortest path from start to goal via respective nodes with reference to the summed up shortest cost, thereby searching a path from start to goal. As a result, if the present invention is used for various planning problems in a field of computer graphics or robots and navigation systems, it is possible to perform a rapid search for various motions of robots and CG characters.

As a preferred embodiment, (1) locally most suitable multiple paths, whose topologies are different to each other, are searched by utilizing a path via one point and its cost, and, (2) the twice cost calculations by utilizing the Dijkstra algorithm, or, the twice cost calculations and the path search for the different topology are processed in parallel. In both cases, it is preferred since the multiple path search can be more rapid.

For a better understanding of the present invention, and to show how the same may be carried into effect, reference will now be made, by way of example to the accompanying drawings, in which:
Figs. 1a - 1c are schematic views respectively explaining steps of the Dijkstra algorithm as a general graph search method;
Fig. 2 is a schematic view explaining a method of searching shortest path from information of previous node in the Dijkstra algorithm;
Fig. 3 is a schematic view explaining shortest paths from start to all nodes in the dual Dijkstra search according to an embodiment of the invention;
Fig. 4 is a schematic view explaining shortest paths from goal to all nodes in the dual Dijkstra search according to an embodiment of the invention;
Fig. 5 is a schematic view explaining paths via points in the dual Dijkstra search according to an embodiment of the invention;
Fig. 6 is a schematic view explaining a shortest path from start to goal via one node in the dual Dijkstra search according to an embodiment of the invention;
Fig. 7 is a schematic view explaining paths generated by a known K shortest path problem; and
Fig. 8 is a schematic view explaining different topology paths.

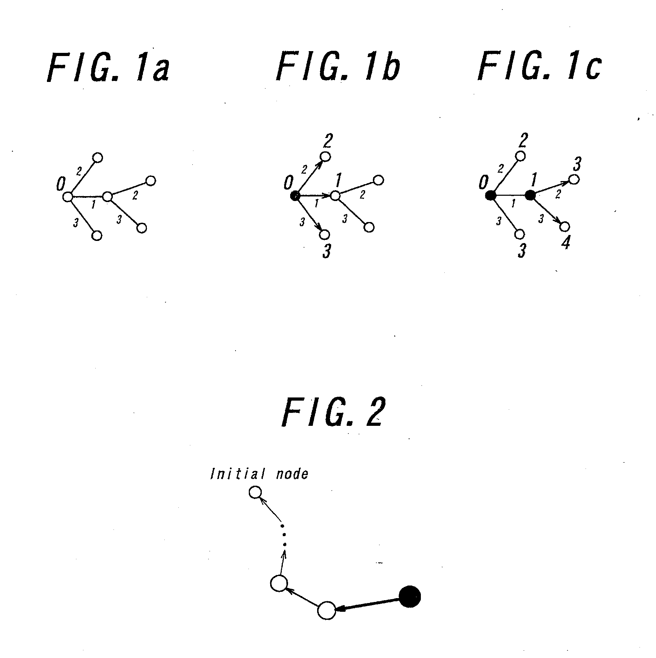

Prior to explaining an algorithm of the dual Dijkstra search according to embodiments of the invention, an algorithm of the Dijkstra search that is a general method of searching the shortest path will be explained. The Dijkstra search is an algorithm for calculating a shortest path from one node to all nodes on a graph. In the Dijkstra search algorithm, the shortest paths to all nodes on the graph are decided one by one from a start point. The area of decisions of the shortest paths is gradually widened. Finally, the shortest paths to all nodes are searched. Actually, the Dijkstra search is performed by the following steps.
(1) As shown in Fig. 1a, a cost of the start point is set to zero.
(2) As shown in Fig. 1b, a cost of the node connected to the start point is calculated.
(3) A list of the nodes wherein the costs are calculated is formed. The start point is taken off from the list.
(4) As shown in Fig. 1c, the node having the lower cost is selected on the list, and a cost of node connected to the node having the lower cost is calculated.
   Here,
   1. The nodes wherein their costs are newly calculated are added to the list.
   2. In the case that the cost is calculated at multiple times to the same node, the lower cost is re-registered on the list.
(5) After a cost calculation of the connected node, the node is taken off from the list, and the cost of the node is decided.
(6) When the list becomes empty by repeatedly performing the steps (3) and (4), the costs of all the nodes are decided, and thus this repeated operation mentioned above is finished.

In this manner, it is possible to calculate the shortest costs to the start point at respective nodes by utilizing the Dijkstra search. Moreover, in the step (4) wherein the cost is decided, if a previous node position is stored at respective nodes, the shortest node can be calculated by tracing the nodes sequentially as shown in Fig. 2. The Dijkstra search is effective for calculating the shortest path from the start point to the goal point, but it is not possible to calculate multiple paths that connect two points.

The dual Dijkstra search according to an embodiment of the present invention is largely categorized by two steps. At first, as a primary step, costs of paths from start to goal via a certain point are calculated via all points by utilizing the Dijkstra search twice. Then, as a second step, among the calculated paths, paths having different topology are selected. Hereinafter, the above steps will be explained successively.

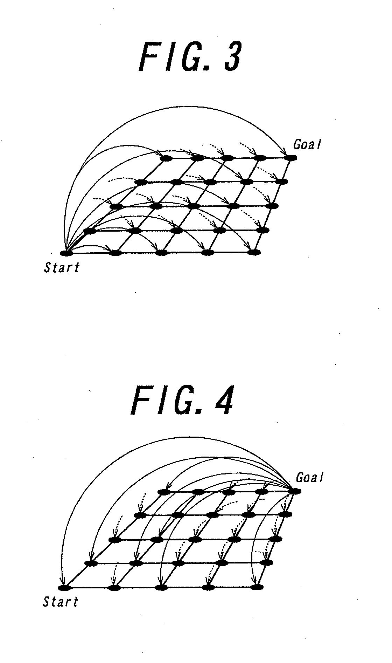

Step 1:
(1) As shown in Fig. 3, the Dijkstra search is performed from the start point.
(2) As shown in Fig. 4, the Dijkstra search is also performed from the goal point.
(3) The costs, which are calculated by twice Dijkstra search and are stored in all nodes respectively, are summed up.

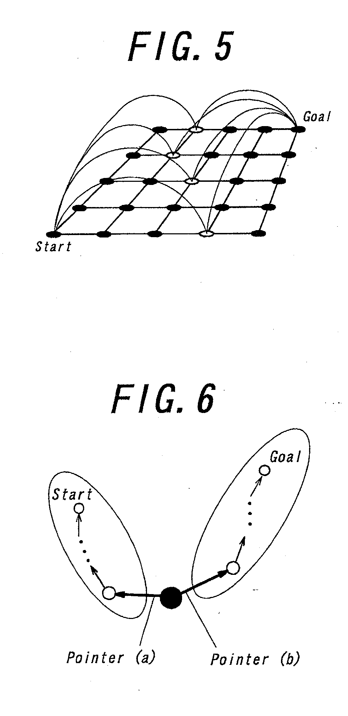

As a result of these steps, the following cost and position are obtained respectively at one node.
(1) A lowest cost from start to the target node and a lowest cost from goal to the target node. That is, as shown in Fig. 5, the lowest cost of the path from start to goal via respective nodes.
(2) A position of the previous node of the target node in the path connecting the target node and the start node. That is, pointer (a) shown in Fig. 6.
(3) A position of the previous node of the target node in the path connecting the target node and the goal node. That is, pointer (b) shown in Fig. 6.

If the path is traced along both the start point direction and the goal point direction as shown in Fig. 8, it is possible to decide the shortest path via one point. Since this information can be stored at all nodes, it is possible to obtain the shortest paths via one point to the number of the nodes at best.

Step 2:
Locally the most suitable paths having different topology are calculated by utilizing a set of the paths whose number corresponds to the nodes obtained by the step 1 and their costs. As previously mentioned, the paths having different topology means non-successively transition path. If the path is not successively transited, points that are not adjacent to each other exist necessarily. By utilizing this condition, the following steps are used.
(1) A node having the lower cost is selected, and a path whose node is the thus selected node is depicted. This path is the most suitable path.
(2) All nodes on this path are marked.
(3) A node having the second the lower cost is selected, and a path whose node is the thus selected node is considered. Here,
   1. In the case that all nodes on this path are adjacent to the previously marked nodes, this path is not depicted.
   2. In the case that even one node that is not adjacent to the marked node at all exists, this path is depicted. This path is the most suitable path having a different topology.
(4) The above steps are repeated till all nodes are marked.

At first, this method increases a region having the same topology around the shortest path. If the path having a different topology is found, a region having another topology is increased from the path. Finally, all space is divided into regions having different topology. In this manner, only the most suitable path among the same topology is depicted.

The algorithm of the dual Dijkstra search according to preferred embodiments of the invention can be performed rapidly by utilizing parallel processing. Since the calculation based on the Dijkstra search that is performed twice is performed independently, it is possible to utilize parallel processing. Moreover, since a part of calculating the path having different topology can also be performed by increasing regions which have the same topologies around not only the shortest hot multiple paths, it is also possible to utilize parallel processing.

As is clearly understood from the above explanations, according to the dual Dijkstra search for planning multiple paths embodying the invention, it is possible to search the multiple paths by the substantially same calculation time as that of obtaining the most suitable path only. As a result, if the present invention is used for various planning problems in field of computer graphics or robots and navigation systems, it is possible to perform a rapid search for various motions of robotics and CG characters. Moreover, it provides multiple paths that can be used for planning the path.

## Claims

1. A dual Dijkstra search for planning multiple paths, comprising the steps of: calculating a first lowest cost from start to all nodes by utilizing an algorithm known as the Dijkstra algorithm; calculating a second lowest cost from goal to all nodes by utilizing the Dijkstra algorithm; summing up the first lowest cost and the second lower cost to obtain a summed up the lowest cost; and storing at all nodes the summed up lower cost as a cost of the lower path from start to goal via respective nodes, thereby searching a path from start to goal.

2. A dual Dijkstra search for planning multiple paths, comprising the steps of: calculating a first lowest cost from start to all nodes by utilizing an algorithm known as the Dijkstra algorithm; calculating a second shortest cost from goal to all nodes by utilizing the Dijkstra algorithm; summing up the first shortest cost and the second shortest cost to obtain a summed up shortest cost; and obtaining at all nodes a shortest path from start to goal via respective nodes with reference to the summed up shortest cost, thereby searching a path from start to goal.

3. The dual Dijkstra search for planning multiple paths according to claim 1 or 2, wherein locally and most suitable multiple paths, whose topologies are different to each other, are searched by utilizing a path with one via point and its cost.

4. The dual Dijkstra search for planning multiple paths according to claim 1 or 2, wherein the twice cost calculations by utilizing the Dijkstra algorithm, or, the twice cost calculations and the path search for the different topology are processed in parallel.

5. A motion planning, wherein the dual Dijkstra search for planning multiple paths according to claim 1 or 2 is utilized.
